# EUROPEAN PATENT APPLICATION

(11) **EP 2 503 356 A1**
(43) Date of publication of application: **26.09.2012**
(21) Application number: 11275046.8
(22) Date of filing: 23.03.2011
(51) Int. Cl.: G01S 17/87, G01S 13/87

(54) **Object Tracking**

(71) Applicant: BAE Systems Plc, London SW1Y 5AD (GB)
(72) Inventor: The designation of the inventor has not yet been filed
(74) Representative: BAE SYSTEMS plc Group IP Department

(57) **Abstract**

Tracking apparatus and a method of tracking an object (4), e.g. a helmet of an aircraft pilot, relative to a given space (2) such as an aircraft cockpit are provided. The object (4) is moveable within the space and the apparatus comprises one or more transmitters (6) for transmitting electromagnetic radiation into the space; a number of structures (14, 16, 18), adapted to reflect, scatter, or absorb and re-radiate electromagnetic radiation incident on the structures. Each structure (14, 16, 18) has a substantially fixed position relative to the object (4) and one or more receivers (6) are provided for receiving the reflected, scattered, and/or re-radiated electromagnetic radiation. A processor (8), adapted to determine a location and/or orientation of the object (4) in the space (2), is also provided which uses data corresponding to the received electromagnetic radiation to determine position and/or orientation of the object.

## Description

### FIELD OF THE INVENTION

The present invention relates to an apparatus and method for tracking an object relative to a given space in which the object is moveable. In particular, the present invention is related to, but not limited to, determining the location and orientation of a pilot's helmet in an aircraft cockpit.

### BACKGROUND

Typically helmet tracking systems are used to determine a location and/or orientation of a helmet relative to a given space in which the object is located. For example, a helmet tracking system may be used to determine a location and/or orientation of a helmet of an aircraft pilot within a cockpit of an aircraft.

Conventional helmet tracking systems comprise flashing lights, in visible or infra-red wavebands, on an exterior surface of a helmet. Cockpit-mounted sensors register the distribution of these lights. This sensor data is used to determine a position and orientation of the helmet.

Such helmet tracking systems typically require power and electronic connections to power and control the lights on the exterior of the helmet. Thus, the complexity, weight, and volumetric requirements of the helmet tend to be relatively large compared to standard helmets.

Unrelated to helmet tracking systems, a general process for applying sensor and other electronic functionality directly onto structural surfaces is known as Direct Write. Known forms of direct writing include printing (e.g. ink-jet printing), painting or other forms of depositing materials on to a structural surface in a controlled pattern. In general, examples of directly written features include conductor tracks, as well as more complex multi-layered patterns.

Further details of Direct Write are as follows. The term Direct Write (or direct writing) describes a range of technologies which allows the fabrication of two or three-dimensional functional structures using processes that are compatible with being carried out directly onto potentially large complex shapes (DTI Report February 2004 "Direct Writing"). Direct Write manufacturing techniques include: ink jet, micro-spray, quill, pen, aerosol, pulsed laser evaporation, and laser direct etching. Direct Write has the ability to fabricate active and passive functional devices directly onto structural parts and assemblies.

In general, in Direct Write processes, writing or printing materials may comprise a wide range of powders, suspensions, plasters, colloids, solutes, vapours etc., which may be capable of fluid flow and which may be applied in pastes, gels, sprays, aerosols, liquid droplets, liquid flows, etc. Once applied, the material may be fixed by curing, consolidating, sintering or allowing to dry. This frequently involves application of heat to change the state of the material to a solid phase.

### SUMMARY OF THE INVENTION

In a first aspect, the present invention provides apparatus for tracking an object relative to a given space, the space being a space in which the object is moveable, the system comprising: one or more transmitters for transmitting electromagnetic radiation into the space; a plurality of structures, wherein each structure is adapted to reflect, scatter, or absorb and re-radiate electromagnetic radiation that is incident on that structure, and wherein each structure has a substantially fixed position relative to the object; one or more receivers for receiving the reflected, scattered, and/or re-radiated electromagnetic radiation; and a processor adapted to determine a location and/or orientation of the object in the space using data corresponding to the received electromagnetic radiation.

Each of the structures may be different from the other structures such that the electromagnetic radiation reflected, scattered, or absorbed and re-radiated by a certain structure is distinguishable from the electromagnetic radiation reflected, scattered, or absorbed and re-radiated by a different structure.

The space may be a compartment of a vehicle from which the vehicle is operated.

The vehicle may be an aircraft.

The object may be a helmet.

The transmitters and the receivers may be positioned at known positions inside the space.

Each of the structures may be a fiduciary marker.

The shape of at least one of the structures may be a spiral.

The electromagnetic radiation may be in one of the following frequency ranges: (i) the radio frequency range, (ii) the infrared range, (iii) the visible light range.

At least one of the structures may be applied to a surface of the object using a direct write process.

The plurality of structures may comprise three or more structures.

The system may further comprise a further processor arranged to determine display data using the determined location and/or orientation of the object in the space; and a display for displaying the display data.

In a second aspect, the present invention provides a method of tracking an object relative to a given space within which the object is moveable, the method comprising: transmitting electromagnetic radiation into the space; receiving reflected, scattered, and/or re-radiated electromagnetic radiation from a plurality of structures, wherein each structure has a substantially fixed position relative to the object; and processing the received electromagnetic radiation to determine a location and/or orientation of the object in the space.

In a third aspect, the present invention provides a program or plurality of programs arranged such that when executed by a computer system or one or more processors it/they cause the computer system or the one or more processors to operate in accordance with the second aspect.

In a fourth aspect, the present invention provides a machine readable storage medium storing a program or at least one of the plurality of programs according to the third aspect.

### BRIEF DESCRIPTION OF THE DRAWINGS

Figure 1 is a schematic illustration (not to scale) of an aircraft cockpit in which a helmet tracker implements a tracking process to track a pilot's helmet;
Figure 2 is a schematic illustration (not to scale) of the helmet; and
Figure 3 is a process flow-chart showing certain steps of a helmet tracking process performed using the tracker.

### DETAILED DESCRIPTION

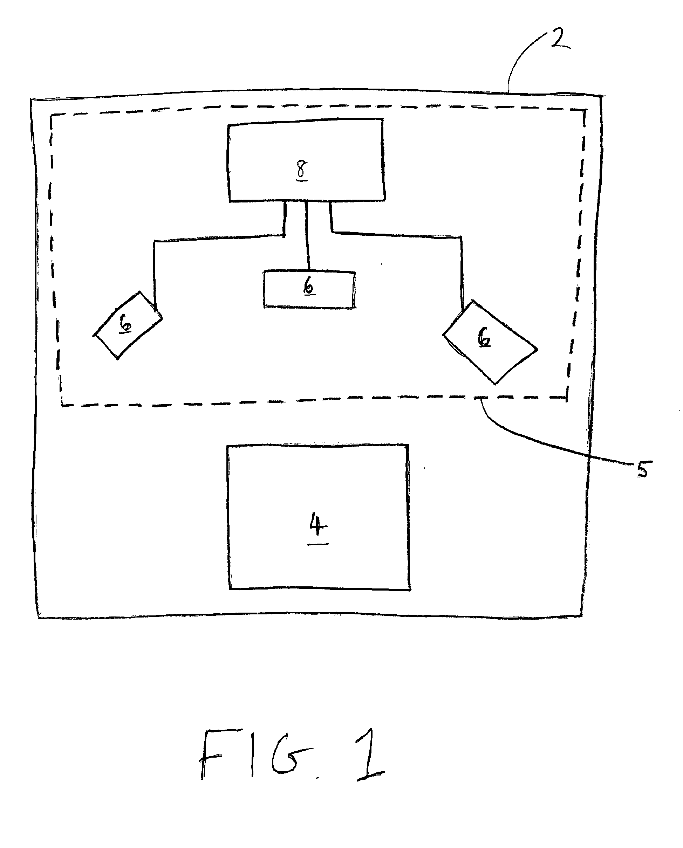

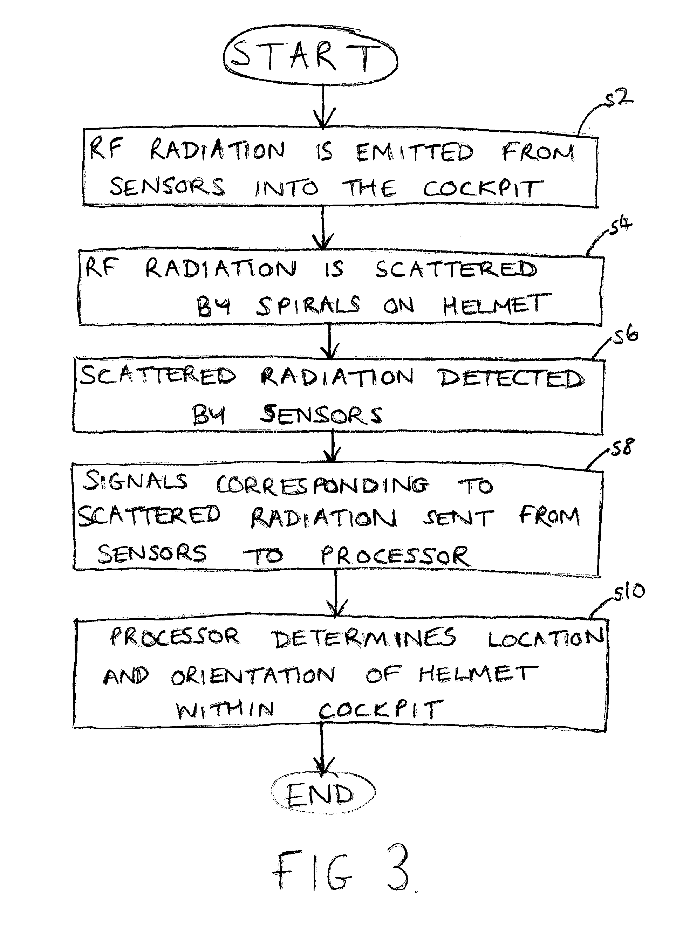

Figure 1 is a schematic illustration (not to scale) of an aircraft cockpit, hereinafter referred to as the "cockpit 2", in which a helmet tracker, hereinafter referred to as the "tracker 5", is used to track a helmet 4 of a pilot of the aircraft. In this embodiment, the tracking of the helmet 4 comprises determining a location and/or orientation of the helmet 4 in the cockpit 2. This tracking process is described in more detail below with reference to Figure 3.

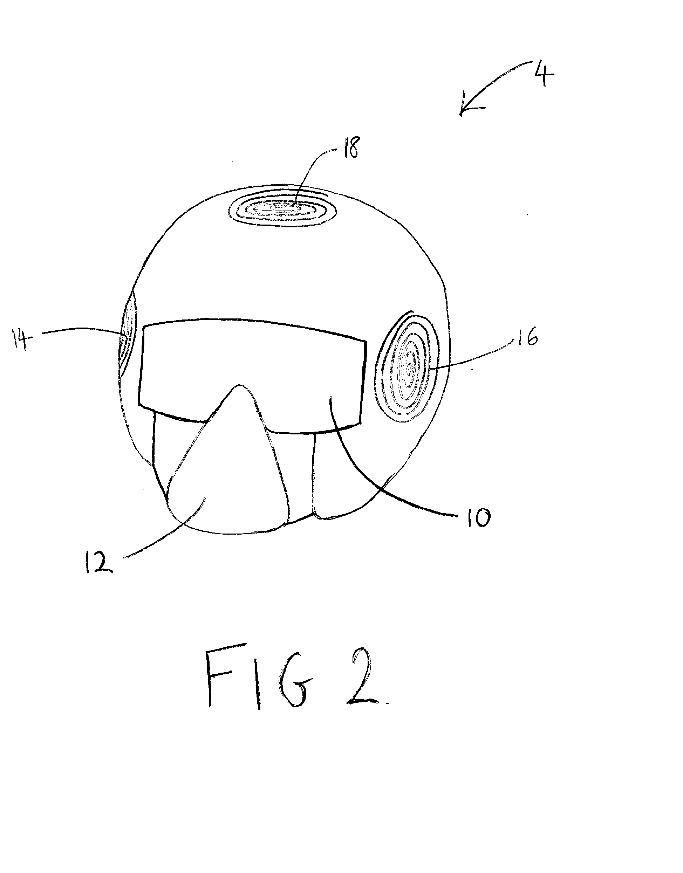

The helmet 4 is described in more detail later below with reference to Figure 2.

In this embodiment, the tracker 5 comprises three sensors 6 and a processor 8 coupled to each of the three sensors 6.

In this embodiment, each of the sensors 6 is a radiofrequency (RF) sensor comprising an RF transmitter and receiver. In other words, in this embodiment each sensor is arranged to transmit, or emit, RF radiation and receive RF radiation (e.g. reflected transmitted RF radiation).

In operation, the sensors 6 and the processor 8 operate as described later below with reference to Figure 3.

In this embodiment, the sensors 6 are positioned such that they are not co-planar. Also, in this embodiment, sensor placement tends to provide substantially optimal steradian (solid angle) sensor coverage of the cockpit 2.

Figure 2 is a schematic illustration (not to scale) of the helmet 4.

In this embodiment the helmet 4 comprises a visor 10 and an oxygen mask 12. The visor 10 and the mask 12 are positioned at a front of the helmet 4.

The helmet 4 further comprises three spiral-shaped features, namely a first spiral 14, a second spiral 16, and a third spiral 18.

In this embodiment, each of the spirals 14, 16, 18 are made of a material that has relatively high conductivity, e.g. a metal such as silver, gold, or copper.

In this embodiment the spirals 14, 16, 18 are formed on the exterior surface of the helmet 4 using a Direct Write process. An advantage provided by using a Direct Write process is that Direct Write process advantageously tend to facilitate the printing of functional (e.g. optical, RF, or electrical) elements and devices onto curved structures (i.e. the helmet 4). In other words, the Direct Write process provides that the spirals 14, 16, 18 are conformal to the external surface of the helmet 4. Moreover, the Direct Write Process provides that the spirals 14, 16, 18 are of relatively low profile (with respect to the external surface of the helmet 4). A further advantage provided by the use of a Direct Write process is that each spiral 14, 16, 18 may be applied as a separate entity. This tends to advantageously provide that the spirals 14, 16, 18 may be applied to the helmet 4 at different times if necessary. Furthermore, this tends to advantageously provide that the spirals 14, 16, 18 operate as independent features, i.e. if the functionality of a certain number of the spirals 14, 16, 18 is somehow affected (e.g. some of the spirals 14, 16, 18 are damaged), any undamaged spiral structures operate normally. Furthermore, Direct Write processes tend to allow for the forming of spiral loops of a material or materials of appropriate thicknesses and widths, i.e. spiral loops of a material or materials, the material or materials having a thickness and/or width that provides radiofrequency scattering properties such as those described later below. For example, a Direct Write process advantageously tends to allow for the formation of spirals having loops made of a material having a thickness in the range of submicron to greater than 100 microns, e.g. 50microns.

In this embodiment, the first spiral 14 is positioned on a first side of the helmet 4. The second spiral 16 is positioned on a second side of the exterior surface of the helmet 4 opposite the first side. The third spiral 18 is positioned on a top of the helmet 4.

In this embodiment, the spirals 14, 16, 18 are not positioned symmetrically on the helmet 4. Furthermore, the size, pitch and depth of each of the spirals 14, 16, 18 are different from that of the other spirals 14, 16, 18. This tends to facilitate the identification of (scattered) returns from the helmet to aid the tracking algorithm.

In this embodiment a location of each of the spirals 14, 16, 18 on the surface of the helmet 4 relative to the other spirals 14, 16, 18 and features of the helmet 4 (e.g. the visor 10 and the mask 12) is known. Thus, knowing a location of each of the spirals 14, 16, 18 within the cockpit 2 enables the determination of the location and orientation of the helmet 4 within the cockpit 2. From the locations of the spirals within the cockpit 2 it is possible to determine values or ranges of values for parameters related to the location and orientation of the helmet 4, such as a line of sight or field of vision of a pilot wearing the helmet 4.

In this embodiment, each of the three spirals 14, 16, 18 is different to the other two spirals, i.e. it is possible to distinguish between the three spirals 14, 16, 18. For example, each spiral may have a different number of loops, each spiral may have a different spacing between the loops of the spiral, and/or the loops of each spiral may have a different thickness.

The spiral shape of each of the spirals 14, 16, 18 provides that radiofrequency radiation that is incident on a spiral (i.e. the radiofrequency radiation emitted by the sensors 6) is scattered by that spiral. Also, in this embodiment the aforementioned relative differences between each of the spirals 14, 16, 18 provides that radiofrequency radiation that is incident on a particular spiral is scattered in a different way to how it is scattered by another of the spirals 14, 16, 18. Thus, the spirals 14, 16, 18 may be uniquely or individually identified and distinguished based on scattered RF radiation.

A spiral scattering incident radiation in a different way to the other spirals advantageously tends to facilitate the discrimination of the spirals. Indeed, the displaced frequency responses of the spirals tend to provide that the locations of the spirals in the cockpit can be more easily distinguished.

Apparatus, including the processor 8, for implementing the above arrangement, and performing the method steps to be described later below with reference to Figure 3, may be provided by configuring or adapting any suitable apparatus, for example one or more computers or other processing apparatus or processors, and/or providing additional modules. Any number of the computers, processors, and/or other modules of the apparatus may be located within the cockpit 2, remote from the cockpit 2 and onboard the aircraft, or remote from the aircraft. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 3 is a process flow-chart showing certain steps of a helmet tracking process performed using the tracker 5 to track the helmet 4.

At step s2, RF radiation is emitted by each of the three sensors 6 into the cockpit 2.

At step s4, the emitted RF radiation is scattered by each of the spirals 14, 16, 18 on the helmet 4. Each of the spirals 14, 16, 18 scatters the emitted RF radiation differently to how each of the other spirals 14, 16, 18 scatters the radiation.

At step s6, the scattered RF radiation is detected or received by the sensors 6.

At step s8, a signal is sent from each sensor 6 to the processor 8. A signal sent from a sensor 6 corresponds to the detected scattered RF radiation detected/received at that sensor 6.

At step s10, the processor 8 processes the received signals to determine a value for a location of each of the spirals 14, 16, 18 within the cockpit 2. The determined positional information describes the location of the helmet 4 within the cockpit 2, and also the orientation of the helmet 4. This determined information may be used, for example by the processor 8, to determine a line of sight or field of view of a pilot wearing the helmet 4. Such information may, for example, be used to determine appropriate data for display to the pilot e.g. locations of other aircraft not in the pilot's field of view.

Thus, an embodiment of an apparatus and method for tracking (i.e. determining location and orientation) a helmet 4 of a pilot within a cockpit 2 of an aircraft is provided.

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

An advantage provided by the use of spiral-shaped RF radiation scatterers (i.e. the spirals 14, 16, 18) is that RF radiation that is non-normally incident on a scatterer/spiral tends to be scattered. The spirals 14, 16, 18 advantageously tend to have a wide angle radar cross-section (RCS) scattering property. This advantageously tends to facilitate the determination of the location of a spiral 14, 16, 18 within the cockpit (as described above with reference to Figure 3).

An advantage provided by the use of forming the spirals 14, 16, 18 using a Direct Write process is that the spirals 14, 16, 18 may be formed at the same time as other Direct Write features, such as those used in a crack detection system. WO 2007/088395 A1 discloses the use of a Direct Write process to form a crack gauge comprising two parallel conductive tracks that act respectively as a probe track and a sense track. Furthermore, the Direct Write formed spirals 14, 16, 18 themselves may advantageously be used in a crack detection system.

An advantage provided by the above described embodiments is that the complexity of the helmet 4 compared to conventional helmets for tracking tends to be reduced. In particular, the spirals 14, 16, 18 printed on the external surface of the helmet 4 tend to be advantageously simple compared to conventional systems, for example systems utilising electronic lights mounted to the helmet, means for powering and controlling the lights, and electronic connections to connect the lights to the control/power means.

The spirals 14, 16, 18 of the above embodiments advantageously do not require a separate power source. This advantage results from the RF radiation scattering properties of the spirals 14, 16, 18 which provides that the structures reflect/scatter incident RF radiation and do not emit RF radiation themselves. This advantageously tends to provide that problems caused by electronic connection between a helmet and a control/power supply elsewhere in a cockpit are alleviated (e.g. a problem of requiring that such an electronic connection is severed if the pilot need to eject from the aircraft). Moreover, the amount of electronic connections within a helmet tends to be advantageously reduced since the spirals 14, 16, 18 do not require electronic connections.

The relative simplicity of the spirals 14, 16, 18 on the helmet 4 of the above embodiments advantageously tends to provide that the helmet 4 weighs less than conventionally tracked helmets. This tends to reduce the risk of injury to the neck of the pilot. Moreover, this tends to allow for greater pilot mobility.

A further advantage provided by the aforementioned relative simplicity is that volumetric requirements on a helmet to accommodate the features used in helmet tracking are reduced. In other words, the spirals 14, 16, 18 take up less space than conventionally used features. This advantageously tends to allow for smaller helmets, and/or for the incorporation of other systems into the helmet in place of the bulkier conventional tracking systems.

A further advantage provided by the aforementioned relative simplicity is that a cost of the helmet tends to be reduced compared to conventional helmets.

A further advantage provided by the aforementioned relative simplicity is that the helmet tracking apparatus according to the invention tends to be easier to install, and easier to manufacture than conventional systems.

A further advantage provided by the aforementioned relative simplicity is that a likelihood of a malfunction of the tracking system tends to be reduced compared to that in conventional helmet tracking systems.

A further advantage is that the apparatus may be adapted for tracking a helmet of any size or shape, in a cockpit or other volume or space. In the above embodiments, the distribution of the sensors 6 within the cockpit 2, and the distribution of the spirals 14, 16, 18 on the helmet 4 may be optimised for the particular topologies of the cockpit 2 and helmet 4. For example, the RF radiation may have a frequency of 60GHz, thus the scale of the scattering centre would be approximately 5mm. However, because RF emissions coming from the cockpit 2 may add to the radar cross section of the aircraft, it may be considered advantageous to configure the tracking system such that scattering occurs in the infra-red region (e.g. 1-300 micrometres) to reduce the radar cross-section of the aircraft. Furthermore, it may also be considered advantageous to treat the surface of the canopy/cockpit with gold. This tends to shield the emission and reduce the radar cross-section of the aircraft.

In the above embodiments, the tracking apparatus and process is used to determine the location and orientation of the helmet of an aircraft pilot within the cockpit of an aircraft. However, in other embodiments the apparatus and process may be used to track a helmet of any crewman within any appropriate space, for example the helmet of a driver within the driving compartment of a land-based vehicle (e.g. a tank, or racing car). For example, the apparatus may be advantageously implemented in smart, semi-autonomous weapon systems. In such systems, the operator targeting the weapon typically has to keep the target accurately in sight. The invention tends to provide non-intrusive means for accurately determining the orientation of the operator's head, and achieving accurate targeting.

Moreover, in other embodiments the apparatus may be used to track an entity other than a helmet, e.g. the whole body of a pilot. For example, the invention could be used in stereotactic surgery for the location, e.g. 3D spatial location and orientation of surgical 'targets'. This target could be headgear of a surgeon or, a miniaturised device, e.g. nano-radio like, that could be embedded in a tumour to aid its location and surgical removal. Furthermore, in other embodiments, tracking may be used to remove a burden from collaborative interaction, information gathering and sharing between, for example ground troops. In such a scenario, the 'helmet' of a soldier would be multifunctional and tracked. The above described system advantageously tends to be useable to unburden the troops from using their hands and to imbue them with other functions which don't interfere with their soldiering.

In other embodiments the tracker may comprise a different number of sensors. Moreover, in other embodiments, some or all of the sensors may be positioned outside the cockpit.

In other embodiments the helmet may comprise a different number of spirals. Moreover, in other embodiments the spirals may be distributed on the helmet in a different way from that described above with reference to Figure 2.

In other embodiments one or more different shaped structures or a combination of spiral-shaped and different shaped structures may be used to scatter the incident radiation. For example, structures having a square spiral shape, zigzag shaped structure, fractals, 'corner reflector' shapes, e.g. dihedral and trihedral shapes, and/or structures comprising a series of concentric shapes may be used.

A structure may, for example, be a particulate conductor and may be deposited on to the helmet in the form of a colloid, e.g. ink in a Direct Write process which then dries to provide a conducting track. A structure may, for example, reflect incident radiation by virtue of the difference in conductivity between the structure and the substrate in which it is embedded. Thus, a conducting polymer may be used as a reflector if embedded in an insulating dielectric. For IR radiation, metals, e.g. silver, tend to be relatively good reflectors. However, the relatively higher reflectance tends to be achieved by using dielectric multilayers which work on the basis of interference effects between the layers.

It tends to be a particular advantage to have the "electrical size" of a structure commensurate with the wavelength of the incident radiation. This tends to ensure that the structure produces a resonant response as it is not purely reflective. For example, for a feature to that is illuminated in the THz range, its characteristic size is ∼mm (or 0.1 mm), and a 100GHZ illumination is ∼0.3cm. The configuration and size of the structure tend not to be independent. For instance, dual (interlaced) spirals may have radii of ∼10mm, but operate in the GHz range. The size of the spiral may be reduced by so-called gap-loading where a balun resistor is connected across the arms of the spiral. The performance of a structure tends to depend on the width of the conductor and the substrate.

In other embodiments, electromagnetic radiation of one or different frequency ranges (or RF radiation and radiation of one or more different frequency ranges) may be used. For example, in other embodiments infra-red radiation, ultra-violet radiation and/or visible light may be used. In such embodiments, the radiation scattering structures on the helmet, i.e. the spiral shaped structures of the embodiment described above with reference to Figures 1 to 3, are structures adapted to reflect or scatter the radiation types being used. For example, when using visible light, the spirals 14, 16, 18 may be replaced by two-dimensional barcode-type patterns that are distinctive from one another. In a different tracking apparatus, quantum dots may be used. More generally, the spiral shaped structures may be replaced by any fiduciary marker (fiducial) or combination of fiduciary markers that are appropriate for the type of radiation being used and are able to be distinguished from one another. Fiduciary markers may advantageously display useful information in addition to acting as a fiduciary marker for the helmet tracking system, for example a helmet serial number may be used as a fiduciary marker in a tracking system for an aircraft pilot helmet, or a sponsor logo may be used as a fiduciary marker in a tracking system for a racing car driver helmet.

In other embodiments the spirals or other scattering structures may be formed on, or applied to, the helmet in a different way. For example, a pattern, e.g. a spiral, may be inscribed into a conductive substrate that has been applied to a surface of the helmet. An advantage of forming a radiation-scattering structure in this way is that discriminatory resonance dependent on the depth of the inscribed patter may be provided, i.e. discrimination between scattering-structures may be provided for by the depths of the structures as opposed to the shapes/patterns of the structures. In other embodiments, radiation scattering structures may be formed on a sheet of material distinct from the helmet, cut out or removed from the sheet, and bonded to the helmet, e.g. using an adhesive. An advantage provided by this approach is that multiple radiation-scattering structures can be formed from a single sheet of material. These structures may advantageously then be cut from the sheet and bonded to a helmet where and when required. Moreover, forming radiation scattering structures in such a way tends to have reduced costs compared to certain other methods.

In the above embodiments, the spirals are formed on the helmet such that they are conformal and substantially flush with the external surface of the helmet. However, one or more of the structures partially or wholly need not conform to the exterior surface of the helmet. Also, one or more of the structures may be partially or wholly not substantially flush with the exterior surface of the helmet. For example, one or more radiation-scattering structures may be proud or indented into the external surface of the helmet. In cases where a scattering structure is proud from the helmet, that structure may comprise a number of layers of different materials. Thus, differentiation between scattering structures may be provided by having different layers of materials in each of the proud structures. Thus, two scattering structures may have substantially the same shape but be formed of different material layers, thereby providing differentiation between the two structures.

In other embodiments one or more structures that emit electromagnetic radiation may be used instead of or in addition to one or more of the radiation-scattering structures. For example, structures formed of photoluminescent material, e.g. a fluorescent or phosphorescent material, may be used. Such structures absorb incident electromagnetic radiation and re-radiate, or emit, photons which may then be detected. The structure may, for example, 'down-scatter/up-scatter' the incident radiation so that the emission is at a different frequency from the incident radiation. Furthermore, a structure such as a Rugate filter could be used to modulate the returned radiation, thereby effectively putting a code into the returned radiation. This tends to be advantageous in discriminating the return from various structures at different locations on the helmet.

In other embodiments one or more of the structures may be wholly or partially embedded into the helmet. An example of a structure that may be embedded into a helmet is a trihedral (corner) reflector. Such reflectors tend to be particularly effective radiation-scattering structures. An embedded structure may be formed by forming a scattering structure on an external surface of the helmet and then covering the surface of the helmet with a protective layer. Also, scattering structures may be formed on an internal surface of the helmet. Scattering structures may also be formed on certain features of the helmet, e.g. the visor and/or mask.

In the above embodiments, the spirals are relatively different to each other. Thus, incident radiation is scattered by each spiral differently such that the spirals may be distinguished depending on this scattered radiation. However, each of the spirals (or other scattering structures) may not be relatively different to each other. For example, the radiation scattering provided by a combination of scattering structures (of which two or more of the structures are substantially the same) may be such that location and/or orientation of the helmet can still be determined.

One or more initial layers applied to at least a portion of the exterior surface of the helmet, e.g. by a direct write process or other process, and the active layers, i.e. the spirals or other fiduciary markers, are applied on at least part of the initial layers. In other embodiments, the active layers, i.e. the spirals or other fiduciary markers, are covered, wholly or in part, by further layers, e.g. passive layers.

## Claims

1. Tracking apparatus for tracking an object (4) relative to a given space (2) within which the object (4) is moveable, the system comprising:
one or more transmitters (6) for transmitting electromagnetic radiation into the space;
a plurality of structures (14, 16, 18), wherein each structure (14, 16, 18) is adapted to reflect, scatter, or absorb and re-radiate electromagnetic radiation that is incident on that structure (14, 16, 18), and wherein each structure (14, 16, 18) has a substantially fixed position relative to the object (4);
one or more receivers (6) for receiving the reflected, scattered, and/or re-radiated electromagnetic radiation; and
a processor (8) adapted to determine a location and/or orientation of the object (4) in the space (2) using data corresponding to the received electromagnetic radiation.

2. Apparatus according to claim 1, wherein each of the structures (14, 16, 18) is different from the other structures (14, 16, 18) such that the electromagnetic radiation reflected, scattered, or absorbed and re-radiated by a certain structure (14, 16, 18) is distinguishable from the electromagnetic radiation reflected, scattered, or absorbed and re-radiated by a different structure (14, 16, 18).

3. Apparatus according to claim 1 or claim 2, wherein the space (2) is a compartment of a vehicle from which the vehicle is operated.

4. Apparatus according to claim 3, wherein the vehicle is an aircraft.

5. Apparatus according to any of claims 1 to 4, wherein the object (4) is a helmet.

6. Apparatus according to any of claims 1 to 5, wherein the transmitters (6) and the receivers (6) are positioned at known positions inside the space (2).

7. Apparatus according to any of claims 1 to 6, wherein each of the structures (14, 16, 18) is a fiduciary marker.

8. Apparatus according to claim 7, wherein the shape of at least one of the structures (14, 16, 18) is a spiral.

9. Apparatus according to any of claims 1 to 8, wherein the electromagnetic radiation is in one of the following frequency ranges: (i) the radio frequency range, (ii) the infrared range, (iii) the visible light range.

10. Apparatus according to any of claims 1 to 9, wherein at least one of the structures (14, 16, 18) is applied to a surface of the object using a direct write process.

11. Apparatus according to any of claims 1 to 10, wherein the plurality of structures comprises three or more structures (14, 16, 18).

12. Apparatus according to any of claims 1 to 11, including:
a further processor arranged to determine display data using the determined location and/or orientation of the object (4) in the space (2); and
a display for displaying the display data.

13. A method of tracking an object (4) relative to a given space (2) within which the object (4) is moveable, the method comprising:
transmitting electromagnetic radiation into the space (2);
receiving reflected, scattered, and/or re-radiated electromagnetic radiation from a plurality of structures, wherein each structure (14, 16, 18) has a substantially fixed position relative to the object (4); and
processing the received electromagnetic radiation to determine a location and/or orientation of the object (4) in the space (2).

14. A program or plurality of programs arranged such that when executed by a computer system or one or more processors it/they cause the computer system or the one or more processors to operate in accordance with the method of claim 13.

15. A machine readable storage medium storing a program or at least one of the plurality of programs according to claim 14.
